# EUROPÄISCHE PATENTSCHRIFT

(11) **EP 4 482 640 B1**
(45) Veröffentlichungstag und Bekanntmachung des Hinweises auf die Patenterteilung: **23.07.2025**
(21) Anmeldenummer: 23705528.0
(22) Anmeldetag: 15.02.2023
(51) Int. Cl.: B23F 1/02, B23F 5/04, B23F 19/00

(54) **VERFAHREN ZUR WÄLZENDEN HARTFEINBEARBEITUNG EINER VERZAHNUNG EINES WERKSTÜCKS MITTELS EINES SCHLEIFWERKZEUGS**
METHOD FOR ROLLING HARD-FINE MACHINING OF A TOOTHING SYSTEM OF A WORKPIECE BY MEANS OF A GRINDING TOOL
PROCÉDÉ DE LAMINAGE D'USINAGE DE PRÉCISION D'UNE DENTURE D'UNE PIÈCE AU MOYEN D'UN OUTIL DE MEULAGE

(30) Priorität: 24.02.2022 DE 102022104361
(43) Veröffentlichungstag der Anmeldung: 01.01.2025
(73) Patentinhaber: Kapp Niles GmbH & Co. KG, 96450 Coburg (DE)
(72) Erfinder: GEILERT, Philip, 96482 Ahorn (DE); STEGNER, Achim, 96450 Coburg (DE)
(74) Vertreter: Gosdin, Carstensen & Partner Patentanwälte Partnerschaftgesellschaft mbB
(86) Internationale Anmeldenummer: PCT/EP2023/053738
(87) Internationale Veröffentlichungsnummer: WO 2023/161092

(56) Entgegenhaltungen:
- DE-A1- 102015 000 907
- DE-A1- 102015 209 917
- US-A1- 2015 251 260
- US-A1- 2015 290 730

## Beschreibung

Die Erfindung betrifft ein Verfahren zur wälzenden Hartfeinbearbeitung einer Verzahnung eines Werkstücks mittels eines Schleifwerkzeugs, insbesondere mittels einer Schleifschnecke, bei dem das Schleifwerkzeug auf einer Werkzeugspindel aufgenommen ist und um die Werkzeugachse rotiert, während das Schleifwerkzeug im Eingriff mit der Verzahnung steht, wobei während der Bearbeitung das Schleifwerkzeug relativ zur Verzahnung geführt wird, um die Verzahnung über ihre Breite zu schleifen, und wobei das Schleifwerkzeug während seines Eingriffs mit der Verzahnung zumindest über einen Abschnitt der Breite mit einer nicht-konstanten Drehzahl rotiert.

Bei der Fertigung von Werkstücken mit Verzahnungen werden teilweise hohe Anforderung an die Geräuschentwicklung im Betrieb des Werkstücks mit der Verzahnung gestellt. Dabei ist man bemüht, auf der Flankenoberfläche der Verzahnung topologische Korrekturen anzubringen bzw. die Oberflächenstruktur der Verzahnung vorteilhaft zu verändern. Angestrebt wird damit, dass das Geräuschverhalten beim Betrieb der hartfeinbearbeiteten, insbesondere geschliffenen Verzahnung positiv beeinflusst werden kann.

Ein Verfahren der gattungsgemäßen Art ist aus der US 2015/251260 A1 bekannt. Bei der dort beschriebenen Lösung wird ein spezielles Konzept zum Abrichten einer Schleifschnecke beschrieben, wobei sich beim Abrichten der Schnecke über deren Breite der Eingriffswinkel ändert. Erwähnt wird auch, dass beim Schleifen eines Werkstücks die Rotationsgeschwindigkeit des Werkzeugs geändert werden kann. Ein Verfahren gemäß dem Oberbegriff des Anspruchs 1 ist ferner aus der US 2015/251260 A1 bekannt.

Ein Verfahren der eingangs genannten Art wird auch in der DE 10 2015 000 907 A1 erwähnt, bei dem es darum geht, ein Schleifwerkzeug in Form einer Schleifschnecke mit einer gezielten Modifikation zu versehen, indem die Position eines Abrichters relativ zum Werkzeug beim Abrichten modifiziert wird. Erwähnt wird, dass sich die Drehzahl des Werkstücks bzw. des Werkzeugs sowie der Vorschub des Werkzeugs bzw. des Werkstücks zeitlich ändern können, ohne dass hierfür allerdings spezifische Angaben gemacht werden.

Die DE 10 2015 209 917 A1 beschreibt, dass während eines aktuellen Schleifprozesses die am Werkzeug und Werkstück auftretenden Prozessbelastungen ermittelt werden, indem die Antriebsleistung des Werkzeugantriebs erfasst und unter Berücksichtigung einer Korrekturfunktion zur Eliminierung äußerer Störeinflüsse ausgewertet wird. Auch hier wird die Veränderung der Drehzahl des Werkzeugs am Rande erwähnt, ohne dass hierzu konkrete Angaben gemacht werden.

Die DE 10 2012 015 846 A1 sieht vor, das Werkzeug relativ zum Werkstück exzentrisch zu bewegen, um so eine Modifikation der Oberfläche der Flanke herbeizuführen. Nachteilig ist bei diesem Verfahren, dass der apparative Aufwand relativ hoch ist, da Mittel zur exzentrischen Bewegung des Werkzeugs vorgesehen werden müssen.

Zum selben Zweck ist es aus der EP 1 600 236 A1 bekannt, den Vorschub des Werkzeugs relativ zum Werkstück mit einer sich verändernden Vorschubgeschwindigkeit zu bewegen. Die hiermit erreichbaren Effekte sind allerdings in ihrer Wirkung begrenzt.

Aus der DE 10 2012 019 492 A1 ist es bekannt, zur Verbesserung von Laufgeräuschen der Verzahnung die Vorschubbewegung des Werkzeugs relativ zum Werkstück so zu fahren, dass diese in Abhängigkeit der Gangzahl der Schleifschnecke und der Zähnezahl des Werkstücks gesteuert wird.

Die US 2015/290730 A1 beschreibt das Schleifen mit einer Schleifschnecke, wobei der Schleifschnecke eine spezielle Shiftbewegung während des Schleifens vorgegeben wird.

Bekannt geworden sind auch Lösungen, bei denen durch spezielles Abrichten des Schleifwerkzeugs eine Verbesserung der Geräuschentwicklung der Verzahnung erreicht werden soll.

Der Erfindung liegt die **Aufgabe** zugrunde, ein gattungsgemäßes Verfahren so fortzubilden, dass es in möglichst einfacher Weise effektiv möglich werden soll, Einfluss auf die Oberflächenstruktur der Zahnflanken während der Hartfeinbearbeitung zu nehmen und so Verzahnungen zu produzieren, die sich durch ein günstiges Geräuschverhalten im Betrieb auszeichnen.

Die **Lösung** dieser Aufgabe durch die Erfindung sieht vor, dass die Drehzahl des Schleifwerkzeugs während seines Eingriffs mit der Verzahnung einen konstanten Grundwert aufweist, dem eine zusätzlich zeitveränderliche Drehzahlfunktion überlagert ist, wobei die zeitveränderliche Drehzahlfunktion periodisch ist oder wobei die zeitveränderliche Drehzahlfunktion stochastischen Charakter hat.

Dies kann erfolgen, indem das Schleifwerkzeug während seines Eingriffs mit der Verzahnung mit einer nicht-konstanten Drehzahl angetrieben wird. Alternativ möglich ist es auch, dass das Werkstück mit einer nicht-konstanten Drehzahl angetrieben wird. Über ein "elektronisches Getriebe" sind nämlich die Drehungen der Werkstückachse und der Werkzeugachse miteinander gekoppelt.

Im Falle der nicht-periodisch zeitveränderlichen Drehzahlfunktion kann ein zufällig erzeugter Überlagerungswert vorgegeben werden, so dass dieser einen stochastischen Charakter (z. B. Überlagerung eines "weißen Rauschens") aufweist.

Mit der vorgeschlagenen Vorgehensweise können vorteilhafte Oberflächentopographien mit geringem Aufwand (nämlich rein steuerungstechnisch) erzeugt werden.

Ergänzt kann das vorgeschlagene Vorgehen dadurch werden, dass sich die Vorschubgeschwindigkeit des Schleifwerkzeugs relativ zur Verzahnung über der Breite der Verzahnung ändert.

Eine weitere zusätzliche Einflussmöglichkeit besteht darin, dass das Schleifwerkzeug während seines Eingriffs mit der Verzahnung zumindest über einen Abschnitt der Breite in Richtung der Werkzeugachse verschoben (geshiftet) wird. Dabei kann vorgesehen werden, dass die Verschiebebewegung (Shiftbewegung) mit einer nicht-konstanten Änderung ihrer Geschwindigkeit erfolgt. Die Shiftbewegung kann dabei beispielsweise oszillierend in Richtung der Werkzeugachse erfolgen. Auch für diese Bewegung kann wiederum ein stochastischen Charakter vorgesehen werden.

Auf der Werkzeugspindel kann nur ein einziges Werkzeug angeordnet sein; möglich ist es aber auch, dass mehrere unterschiedliche Werkzeuge auf der Werkzeugspindel aufgenommen sind.

Die Art der Schleifwerkzeuge kann natürlich beliebig sein. Es können abrichtbare Werkzeuge eingesetzt werden, aber auch solche mit einem Stahlgrundkörper, der mit abrasivem Material belegt ist.

Bei der genannten relativen Führung des Werkzeugs relativ zum Werkstück können natürlich überlagerte Bewegungen berücksichtigt werden, um Verzahnungsmodifikationen, insbesondere Balligkeiten, zu erzeugen.

Sofern hier von Schleifen der Verzahnung gesprochen wird, ist mit Blick auf die vorgesehene wälzende Hartfeinbearbeitung bevorzugt der Einsatz einer Schleifschnecke vorgesehen. Allerdings bezieht sich diese Nomenklatur auch auf ähnliche Hartfeinbearbeitungsverfahren für Verzahnungen, was sowohl für Außen- als auch für Innenverzahnungen gilt.

Durch die vorgeschlagene Vorgehensweise kann in sehr einfacher Weise (nämlich rein steuerungstechnisch und ohne zusätzliche Vorrichtungen) Einfluss auf die Oberfläche der Zahnflanken genommen werden, so dass die so hergestellten Verzahnungen ein günstigeres Geräuschverhalten aufweisen. Es können insbesondere sonst mitunter auftretende definierte Welligkeiten auf der Flankenoberfläche vermieden werden, die ungünstig bezüglich des Geräuschverhalten sind.

Die mit dem vorgeschlagenen Verfahren hergestellten Verzahnungen weisen bei geeigneter Auswahl der nicht-konstanten Drehzahl keine Regelmäßigkeiten über die Zahnradbreite auf, so dass im Betrieb ein günstigeres Geräuschverhalten vorliegt und die wahrgenommenen Geräusche subjektiv unauffälliger sind, da Regelmäßigkeiten fehlen.

In den Figuren sind Ausführungsbeispiele der Erfindung dargestellt.
- Fig. 1: zeigt in perspektivischer Darstellung eine Schleifschnecke, mit der die Verzahnung eines Werkstücks geschliffen wird,
- Fig. 2a, Fig. 2b, Fig. 2c, Fig. 2d und Fig. 2e: zeigen schematisch den Verlauf der Drehzahl der Schleifschnecke über der Zeit während des Schleifvorgangs für fünf unterschiedliche Ausführungsformen der Erfindung.

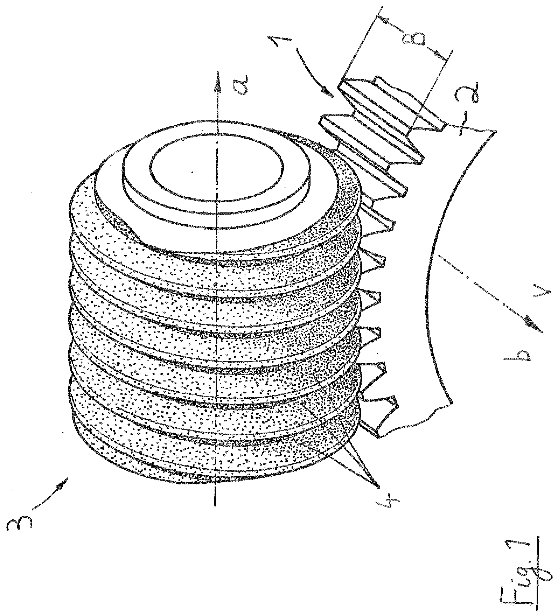

In Figur 1 ist als Beispiel einer wälzenden Hartfeinbearbeitungsoperation eines Werkstücks 2 mit einer Verzahnung 1 das Wälzschleifen mit einer Schleifschnecke 3 dargestellt, die mit ihren abrasiven Flächen 4 der einzelnen Schneckengänge die Flanken der Verzahnung 1 bearbeitet. Dabei rotiert die Schleifschnecke 3 um die Werkzeugachse a und befindet sich im dargestellten Eingriff mit der Verzahnung 1. Demgemäß rotiert das Werkstück 2 simultan (und gekoppelt über ein "elektronisches Getriebe") um die Werkstückachse b.

Hierbei wird die Schleifschnecke 3 relativ zum Werkstück 2 in Richtung der Werkstückachse b mit einer Vorschubgeschwindigkeit v bewegt, um die Verzahnung 1 über die gesamte Breite B der Verzahnung 1 zu schleifen.

Insoweit entspricht der beschriebene Schleifvorgang dem Stand der Technik.

Wesentlich ist, dass nunmehr das Werkzeug, also die Schleifschnecke 3, nicht, wie üblich, mit konstanter Drehzahl angetrieben wird, sondern mit einer nicht-konstanten Drehzahl n.

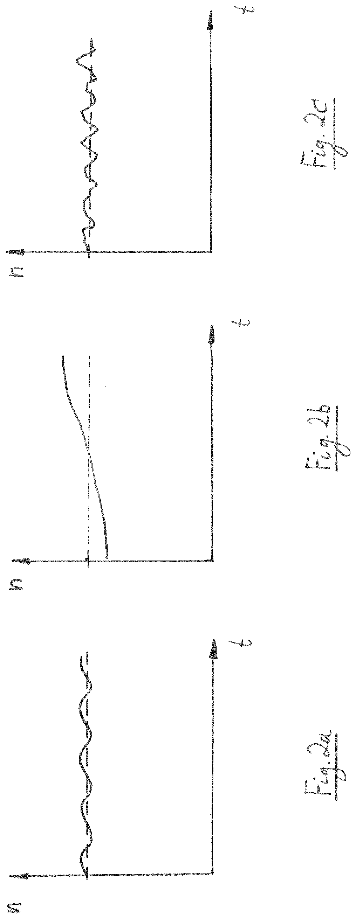

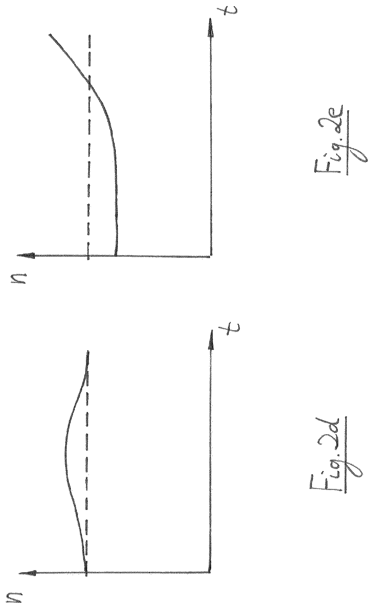

Dies ist für fünf Beispielsfälle in den Figuren 2a, 2b, 2c, 2d und 2e skizziert.

In Figur 2a ist zu erkennen, dass die Drehzahl n der Schleifschnecke 3 über der Zeit (und damit infolge der gegebenen Vorschubgeschwindigkeit auch über die Breite der Verzahnung) einen konstanten Basiswert aufweist, dem ein sinusförmiger Verlauf überlagert ist.

Nach Figur 2b ist es auch möglich, dass die Drehzahl n mit einem Startwert beginnt und sich über die Zeit erhöht. Demgemäß kann das Schleifen mit einer Startdrehzahl begonnen werden, die sich dann über die Breite der Verzahnung stetig erhöht (wie in Figur 2b dargestellt) oder stetig vermindert. Für das Ansteigen oder Abfallen der Drehzahl kann ein linearer Verlauf vorgesehen werden, aber auch ein nichtlinearer Verlauf.

Figur 2c illustriert, dass einem konstanten Basiswert für die Drehzahl ein stochastischer bzw. per Zufallsgenerator gewählter Funktionsverlauf überlagert ist. Hier kann es sich insbesondere um "weißes Rauschen" handeln.

Gemäß Figur 2d beginnt der Schleifvorgang mit einer Startdrehzahl, die sich dann etwa bis zur Mitte der Breite des Werkstücks erhöht, um dann wieder bis zum Ende des Werkstücks auf den ursprünglichen Wert abzufallen.

Figur 2e zeigt schließlich einen Verlauf, bei dem das Schleifen mit einer Drehzahl beginnt, die sich über der Zeit und somit über der Breite der Verzahnung (überproportional bzw. exponentiell) erhöht.

Zusätzlich zu der beschriebenen Veränderung der Werkzeugdrehzahl n kann die Vorschubgeschwindigkeit v nicht-konstant gewählt werden. Auch hierfür sind beliebige Verläufe möglich.

Schließlich besteht eine weitere additive Möglichkeit darin, die Schleifschnecke 3 während der Bearbeitung der Verzahnung 1 zu "shiften", d. h. sie in Richtung der Werkzeugachse b geringfügig zu bewegen. Auch für diese Bewegung kann ein beliebiger Verlauf vorgegeben werden.

Wie beschrieben, ist neben einer konstanten Änderung (auch: neben einer konstanten Beschleunigung) der Eingangsgrößen (Drehzahl, Vorschub, Shiftbewegung) auch eine beliebige Modulation der genannten Eingangsgrößen denkbar. Beispielsweise kann diese über die Ordnung und die Amplitude (Indirekt Phasenlage (Komma-Ordnung)) eingestellt werden. Dieser kann auch eine Beschleunigung überlagert werden. Die Ordnung und die Amplitude können über den Hub (d. h. über die Breite der Verzahnung) variiert werden. Die Modulation kann frei von einer klaren Systematik sein (beispielsweise "weißes Rauschen"). Gleichermaßen kann die Geschwindigkeitsänderung dynamisch erfolgen. Auch eine gleichzeitige oder eine zeitlich versetzte Kombination der dynamischen Beeinflussung der Eingangsgrößen (Drehzahl, Vorschub, Shiftbewegung) ist möglich.

Eine andere (allerdings äquivalente und gleichwertige sowie gleichwirkende) Realisierung der vorgeschlagenen Lösung der veränderlichen Drehzahl des Werkzeugs besteht darin, Einfluss auf das "elektronische Getriebe" zu nehmen, welches ein synchrones abgestimmtes Drehen des Werkzeugs 3 um die Werkzeugachse a und des Werkstücks 2 um die Werkstückachse b realisiert. Im entsprechenden Regelalgorithmus, der die Synchronität zwischen den Achsen a und b herstellt, kann beispielsweise eine Überlagerungsfunktion der in den Figuren 2a, 2b und 2c skizzierten Art vorgegeben werden, so dass nicht - wie üblicherweise angestrebt - ein möglichst hohes Maß an Synchronität zwischen den Achsen vorliegt, sondern eine gezielte Abfälschung derselben. Auch hiermit kann das genannte Ziel erreicht werden.

### Bezugszeichenliste:

- 1: Verzahnung
- 2: Werkstück
- 3: Schleifwerkzeug (Schleifschnecke)
- 4: abrasive Fläche

- a: Werkzeugachse (Schneckenachse)
- b: Werkstückachse
- B: Breite der Verzahnung
- n: Drehzahl des Schleifwerkzeugs
- v: Vorschubgeschwindigkeit der Schleifschnecke relativ zur Verzahnung

## Patentansprüche

1. Verfahren zur wälzenden Hartfeinbearbeitung einer Verzahnung (1) eines Werkstücks (2) mittels eines Schleifwerkzeugs (3), insbesondere mittels einer Schleifschnecke (3), bei dem das Schleifwerkzeug (3) auf einer Werkzeugspindel aufgenommen ist und um die Werkzeugachse (a) rotiert, während das Schleifwerkzeug (3) im Eingriff mit der Verzahnung (1) steht, wobei während der Bearbeitung das Schleifwerkzeug (3) relativ zur Verzahnung (1) geführt wird, um die Verzahnung (1) über ihre Breite (B) zu schleifen, und wobei das Schleifwerkzeug (3) während seines Eingriffs mit der Verzahnung (1) zumindest über einen Abschnitt der Breite (B) mit einer nicht-konstanten Drehzahl rotiert,
**dadurch gekennzeichnet,**
**dass** die Drehzahl (n) des Schleifwerkzeugs (3) während seines Eingriffs mit der Verzahnung (1) einen konstanten Grundwert aufweist, dem eine zusätzlich zeitveränderliche Drehzahlfunktion überlagert ist, wobei die zeitveränderliche Drehzahlfunktion periodisch ist oder wobei die zeitveränderliche Drehzahlfunktion stochastischen Charakter hat.

2. Verfahren nach Anspruch 1, **dadurch gekennzeichnet, dass** sich die Vorschubgeschwindigkeit (v) des Schleifwerkzeugs (3) relativ zur Verzahnung (1) über der Breite (B) der Verzahnung (1) ändert.

3. Verfahren nach Anspruch 1 oder 2, **dadurch gekennzeichnet, dass** das Schleifwerkzeug (3) während seines Eingriffs mit der Verzahnung (1) zumindest über einen Abschnitt der Breite (B) in Richtung der Werkzeugachse (a) verschoben wird.

## Claims

1. Method for rolling hard-fine machining of a toothing (1) of a workpiece (2) by means of a grinding tool (3), in particular by means of a grinding worm (3), in which the grinding tool (3) is mounted on a tool spindle and rotates about the tool axis (a) while the grinding tool (3) is in engagement with the toothing (1), wherein the grinding tool (3) is guided relative to the toothing (1) during the machining in order to grind the toothing (1) over its width (B), and wherein the grinding tool (3) rotates at a non-constant rotational speed during its engagement with the toothing (1) at least over a portion of the width (B),
**characterized in**
**that** the rotational speed (n) of the grinding tool (3) during its engagement with the toothing (1) has a constant basic value on which an additionally time-varying rotational speed function is superimposed, wherein the time-varying rotational speed function is periodic or wherein the time-varying rotational speed function has a stochastic character.

2. Method according to claim 1, **characterised in that** the feed rate (v) of the grinding tool (3) changes relative to the toothing (1) over the width (B) of the toothing (1).

3. Method according to claim 1 or 2, **characterised in that** the grinding tool (3) is shifted in the direction of the tool axis (a) over at least a portion of the width (B) during its engagement with the toothing (1).

## Revendications

1. Procédé de finition dure par roulage d'une denture (1) d'une pièce (2) au moyen d'un outil de meulage (3), notamment au moyen d'une vis de meulage (3), dans lequel l'outil de meulage (3) est reçu sur une broche d'outil et tourne autour de l'axe d'outil (a), tandis que l'outil de meulage (3) est en prise avec la denture (1) ; pendant l'usinage, l'outil de meulage (3) étant guidé par rapport à la denture (1) afin de meuler la denture (1) sur sa largeur (B), et l'outil de meulage (3) tournant à une vitesse de rotation non constante pendant son engagement avec la denture (1) au moins sur une section de la largeur (B),
**caractérisé**
**en ce que** la vitesse de rotation (n) de l'outil de meulage (3) présente, pendant son engagement avec la denture (1), une valeur de base constante à laquelle est superposée une fonction de vitesse de rotation supplémentaire variable dans le temps, la fonction de vitesse de rotation variable dans le temps étant périodique ou la fonction de vitesse de rotation variable dans le temps ayant un caractère stochastique.

2. Procédé selon la revendication 1, **caractérisé en ce que** la vitesse d'avance (v) de l'outil de meulage (3) par rapport à la denture (1) varie sur la largeur (B) de la denture (1).

3. Procédé selon la revendication 1 ou 2, **caractérisé en ce que** l'outil de meulage (3) est déplacé dans la direction de l'axe d'outil (a) pendant son engagement avec la denture (1) au moins sur une section de la largeur (B).
